# EUROPÄISCHE PATENTSCHRIFT

(11) **EP 0 355 347 B1**
(45) Veröffentlichungstag und Bekanntmachung des Hinweises auf die Patenterteilung: **20.01.1993**
(21) Anmeldenummer: 89112294.7
(22) Anmeldetag: 05.07.1989
(51) Int. Cl.: B29C 65/10

(54) **Vorrichtung zum Verschweissen mehrlagiger Bahnen aus thermoplastischem Kunststoff**
Apparatus for welding multi-layered thermoplastic webs
Appareil pour le soudage de feuilles multicouches en matière thermoplastique

(30) Priorität: 24.08.1988 DE 3828728
(43) Veröffentlichungstag der Anmeldung: 28.02.1990
(73) Patentinhaber: Windmöller & Hölscher, D-49525 Lengerich (DE)
(72) Erfinder: Hassmann, Werner, Dipl.-Ing., D-4540 Lengerich (DE); Voss, Hans-Ludwig, Dipl.-Ing., D-4542 Tecklenburg 2 (DE)
(74) Vertreter: Gossel, Hans K., Dipl.-Ing.

(56) Entgegenhaltungen:
- DE-A- 3 807 793
- US-A- 3 694 289
- US-A- 4 308 087
- US-A- 4 318 768

## Beschreibung

Die Erfindung betrifft eine Vorrichtung zum Verschweißen mehrlagiger Bahnen aus thermoplastischem Kunststoff bei ihrem Lauf über eine Umlenkwalze, bestehend aus einem an die Umlenkwalze anstellbarem, etwa konzentrisch zu dieser gekrümmtem und87308391 diese im angestellten Zustand über einen Teil ihres Umfangs einfassenden, langgestreckten Gehäuse, das mit mindestens einem längsverlaufenden, gleichsinnig gekrümmten Warmluftkanal versehen ist, der mit einem Einlaß zum Einblasen warmer Luft und in seiner der Umlenkwalze zugewandten Gehäusewandung mit einer Reihe von Austrittsbohrungen oder -spalten versehen ist.

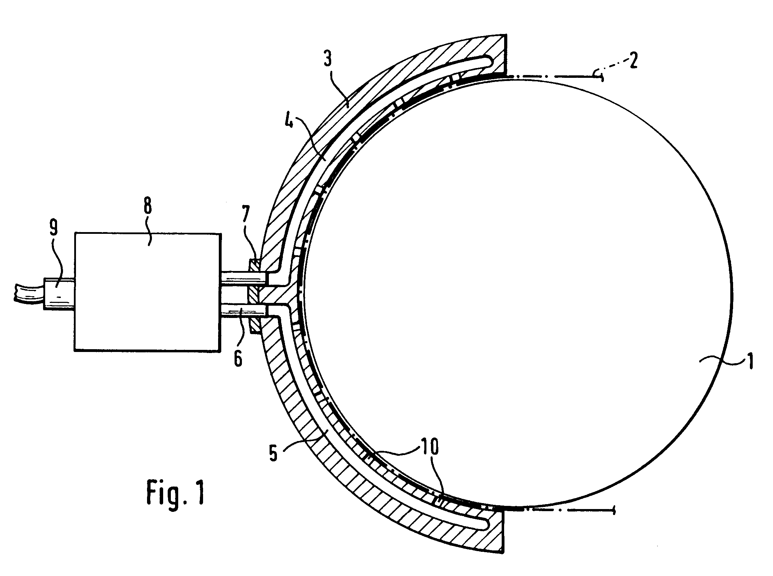

Eine bekannte Vorrichtung dieser Art ist in Fig. 1 der Zeichnung dargestellt. Diese besteht aus einem etwa sichelförmigem Gehäuse 3, das eine Umlenkwalze 1, über die eine mehrlagige Folienbahn oder ein Folienschlauch 2 aus thermoplastischem Material geführt ist, etwa über die Hälfte ihres Umfangs einfaßt. Das Gehäuse 3 weist Warmluftkanäle 4, 5 bildende Ausfräsungen auf, die an ihren inneren Enden durch eine Wandung voneinander getrennt sind und im Bereich ihrer inneren Enden radiale Rohrstutzen 6 aufweisen. Die Rohrstutzen 6 sind durch Halteteile 7 mit dem Gehäuse 3 verbunden. Die Rohrstutzen 6 sind Teil eines Heizgerätes 8, in dem über einen Stutzen 9 eingeblasene Luft erwärmt wird, die dann über die Rohrstutzen 6 in die Kanäle 4, 5 gedrückt wird. Über eine Vielzahl von kleinen Bohrungen 10 tritt die erwärmte Luft aus dem Gehäuse 3 aus und verschweißt die beiden Lagen des Folienschlauches 2 in dem Bereich miteinander, in dem der Folienschlauch an der Reihe der Bohrungen 10 vorbeiläuft. Dabei kann eine Anzahl von durch die Gehäuse 3 gebildeten Schweißeinrichtungen nebeneinander angeordnet sein, die der gewünschten Unterteilung des Folienschlauches entspricht. Die anhand der Fig. 1 beschriebene Vorrichtung weist den Nachteil auf, daß das Heizgerät 8 eine hohe Leistung aufweisen muß, um die aus den Bohrungen 10 austretende Luft soweit zu erwärmen, daß ein einwandfreies Verschweißen der beiden Folienlagen gewährleistet ist. Die erforderliche hohe Leistung des Heitgerätes 8 ist nicht nur durch Verluste infolge von abgestrahlter Wärme bedingt, sondern auch durch den Aufbau dieses Heizgerätes selbst. Dieses besteht aus einem massiven Eisenblock, der durch in Bohrungen eingesetzte Heizpatronen aufgeheizt wird. Durch weitere in dem Eisenblock vorhandene Bohrungen wird durch den Stutzen 9 kalte Luft eingeblasen, die sich in diesem erwärmt und dann über die Rohrstutzen 6 in das Gehäuse 3 der Schweißvorrichtung eintritt.

Eine ähliche Vorrichtung ist aus der US-A-4 308 087 bekannt.

Aufgabe der Erfindung ist es, die Vorrichtung nach dem Oberbegriff des Patentanspruchs 1 derart zu verbessern, daß Wärmeverluste weitgehend vermieden werden.

Erfindungsgemäß wird diese Aufgabe bei einer Vorrichtung der gattungsgemäßen Art dadurch gelöst, daß in dem Gehäuse mindestens ein den Warmluftkanal etwa konzentrisch einfassender zweiter Kanal vorgesehen ist, in dem ein langgestrecktes Heizelement angeordnet ist, und daß der zweite Kanal im Bereich seines einen Endes mit einer Einlaßöffnung zum Einblasen von Luft und im Bereich seines gegenüberliegenden Endes mit einer diesen mit dem Warmluftkanal verbindenden Öffnung oder Leitung versehen ist. Bei der erfindungsgemäßen Vorrichtung wird die die Verschweißung bewirkende Luft unmittelbar in dem Gehäuse der Schweißvorrichtung erwärmt, so daß Wärmeverluste durch Abstrahlung weitgehend vermieden werden. Durch die erfindungsgemäße Vorrichtung ist gewährleistet, daß die zugeführte Heizleistung ganz überwiegend zur Erwärmung der Luft ausgenutzt wird und Wärmeverluste auf ein Mindestmaß herabgesetzt werden.

Zweckmäßigerweise besteht das Heizelement aus einer Heizspirale.

Der das Heizelement enthaltende zweite Kanal kann mit dem Warmluftkanal durch eine Leitung verbunden sein, die etwa im mittleren Bereich des Warmluftkanals mündet.

Zweckmäßigerweise sind jeweils zwei Warmluftkanäle und zwei Heizelemente enthaltende zweite Kanäle vorgesehen, die an ihren inneren Enden durch Zwischenwände des Gehäuses voneinander getrennt sind. In vorteilhafter Weise sind die zweiten, die Heizelemente enthaltenden Kanäle im Bereich ihrer äußeren Enden mit Stutzen oder Öffnungen zum Einblasen von Luft versehen.

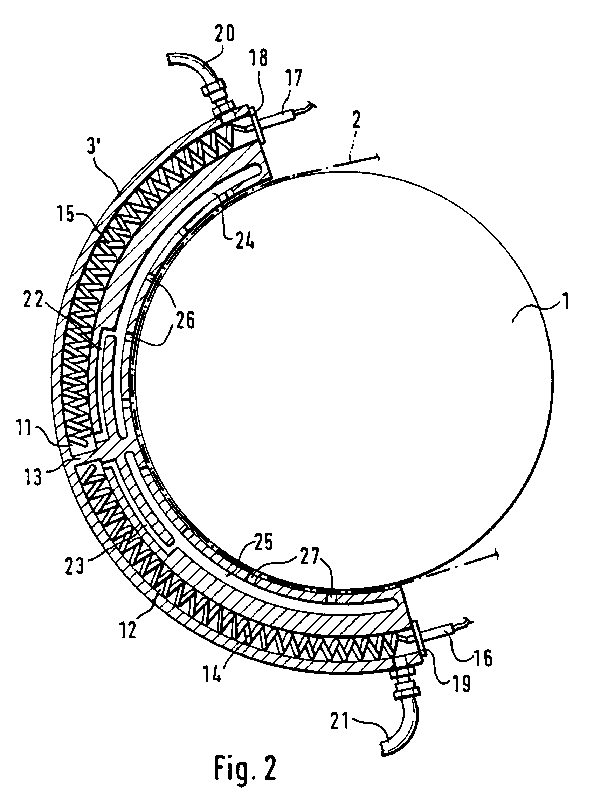

Ein Ausführungsbeispiel der Erfindung wird nachstehend anhand der Fig. 2 der Zeichnung, in der ein Längsschnitt durch die Schweißvorrichtung dargestellt ist, näher erläutert.

Der durch eine Längsschweißnaht zu unterteilende Folienschlauch 2 läuft in der dargestellten Weise über eine Umlenkwalze 1. Das sichelförmige Gehäuse 3′ der Schweißvorrichtung faßt die Umlenkwalze 1 etwa über die Hälfte ihres Umfangs ein, wobei der Folienschlauch durch den Ringspalt läuft, der zwischen dem Gehäuse 3′ und der Umlenkwalze 1 gebildet ist. Das Gehäuse 3′ weist ausgehend von seinen beiden Stirnenden zwei Kanäle 11, 12 auf, die an ihren inneren Enden durch einen Steg 13 voneinander getrennt sind. Die beiden Kanäle 11, 12 verlaufen konzentrisch zu den beiden Warmluftkanälen 24, 25, die an ihren inneren Enden ebenfalls durch einen Steg voneinander getrennt sind. In die Kanäle 11, 12 sind zwei Heizspiralen 14, 15 eingesetzt, die mit die Abschlußdeckel 18, 19, die die Kanäle 11, 12 gegenüber der Atmosphäre abschließen, durchsetzenden, nach außen weisenden Anschlüssen 16, 17 versehen sind. Im Bereich ihrer äußeren Enden sind die die Heizspiralen enthaltenden Kanäle 11, 12 mit radialen Stutzen versehen, an die Luftzuführungsleitungen 20, 21 angeschlossen sind. Durch diese Luftzuführungsleitungen 20, 21 wird in die Kanäle 11, 12 kalte Luft eingeblasen, die unmittelbar an den Heizspiralen 14, 15 vorbeistreift und dabei erhitzt wird. Die erwärmte Luft wird im Endbereich der Kanäle 11, 12 durch die Verteilerkanäle 22, 23 in die Warmluftkanäle 24, 25 geleitet. Sie treten dann aus den Warmluftkanälen 24, 25 durch die in Reihen angeordneten Bohrungen 26, 27 aus und beaufschlagen die Schlauchfolie 2.

Das Gehäuse 3′ der Schweißvorrichtung ist auf der dem Betrachter zugewandten Seite durch einen Deckel geschlossen, der nicht dargestellt ist. Weiterhin ist das Gehäuse 3′ mit Halteeinrichtungen versehen, über die dieses abgefahren und an die Umlenkwalze 1 angestellt werden kann.

## Patentansprüche

1. Vorrichtung zum Verschweißen mehrlagiger Bahnen aus thermoplastischem Kunststoff bei ihrem Lauf über eine Umlenkwalze, bestehend aus einem an die Umlenkwalze anstellbarem, etwa konzentrisch zu dieser gekrümmtem und diese im angestellten Zustand über einen Teil ihres Umfangs einfassenden, langgestreckten Gehäuse, das mit mindestens einem längsverlaufenden, gleichsinnig gekrümmten Warmluftkanal versehen ist, der mit einem Einlaß zum Einblasen warmer Luft und in seiner der Umlenkwalze zugewandten Gehäusewandung mit einer Reihe von Austrittsbohrungen oder -spalten versehen ist,
**dadurch gekennzeichnet,**
daß in dem Gehäuse (3′) mindestens ein den Warmluftkanal (24, 25) etwa konzentrisch einfassender zweiter Kanal (11, 12) vorgesehen ist, in dem ein langgestrecktes Heizelement (14, 15) angeordnet ist, und daß der zweite Kanal (11, 12) im Bereich seines einen Endes mit einer Einlaßöffnung zum Einblasen von Luft und im Bereich seines gegenüberliegenden Endes mit einer diesen mit dem Warmluftkanal (24, 25) verbindenden Öffnung oder Leitung (22, 23) versehen ist.

2. Vorrichtung nach Anspruch 1, dadurch gekennzeichnet, daß das Heizelement aus einer Heizspirale (14, 15) besteht.

3. Vorrichtung nach Anspruch 1 oder 2, dadurch gekennzeichnet, daß der zweite das Heizelement enthaltende Kanal (11, 12) mit dem Warmluftkanal (24, 25) durch eine Leitung (22, 23) verbunden ist, die etwa im mittleren Bereich des Warmluftkanal (24, 25) mündet.

4. Vorrichtung nach einem der Ansprüche 1 bis 3, dadurch gekennzeichnet, daß jeweils zwei Warmluftkanäle (24, 25) und zwei die Heizelemente (14, 15) enthaltende zweite Kanäle (11, 12) vorgesehen sind, die an ihren inneren Enden durch Zwischenwände (13) des Gehäuses (3′) voneinander getrennt sind.

5. Vorrichtung nach Anspruch 4, dadurch gekennzeichnet, daß die zweiten die Heizelemente enthaltenden Kanäle (11, 12) im Bereich ihrer äußeren Enden mit Stutzen oder Öffnungen zum Einblasen von Luft versehen sind.

## Claims

1. Apparatus far welding multi-layered webs of a thermoplastic synthetic material in their course over a guide roller, consisting of an elongate casing that can be applied against the guide roller and curved approximately concentrically with the latter and surrounding the latter over a part of its circumference in its applied state, which casing is provided with at least one longitudinal hot air duct curved in the same way which is provided with an inlet for blowing in hot air and in its casing wall facing the guide roller with a succession of outlet bores or slots,
**characterized in that**
in the casing (3') provision is made for at least one second duct (11, 12), surrounding the hot air duct (24, 25) approximately concentrically, wherein an elongate heating element (14, 15) is arranged, and that the second duct (11, 12) is provided in the region of one of its ends with an inlet opening for blowing in air, and in the region of its opposite end with an opening or line (22, 23) connecting it to the hot air duct (24, 25).

2. Apparatus according to claim 1, characterized in that the heating element consists of a heating coil (14, 15).

3. Apparatus according to claim 1 or 2, characterized in that the second duct (11, 12) containing the heating element is connected to the hot air duct (24, 25) by a line (22, 23) opening out approximately in the median region of the hot air duct (24, 25).

4. Apparatus according to one of claims 1 to 3, characterized in that provision is made respectively for two hot air ducts (24, 25) and two second ducts (11, 12) containing the heating elements (14, 15) which are separated from each other at their inner ends by partitions (13) of the casing (3').

5. Apparatus according to claim 4, characterized in that the second ducts (11, 12) containing the heating elements are provided in the region of their outer ends with connecting pipes or openings for blowing in air.

## Revendications

1. Dispositif pour le soudage de feuilles multicouches en matière thermo-plastique lors de leur passage sur un rouleau ou cylindre de renvoi, comprenant un boîtier allongé courbé à peu près concentriquement à celui-ci et recouvrant celui-ci dans l'état appliqué sur une partie de son pourtour, qui est pourvue au moins d'un canal d'air chaud s'étendant longitudinalement et courbé dans le même sens, qui comporte une entrée pour l'insufflation d'air chaud et dans sa paroi de boîtier orientée vers le rouleau de renvoi une rangée de perçages ou fentes de sortie,
caractérisé
en ce qu'on prévoit dans le boîtier (3') au moins un deuxième canal (11, 12) entourant le canal d'air chaud (24, 25) à peu près concentriquement dans lequel est disposé un élément chauffant (14, 15) allongé, et en ce que le deuxième canal (11, 12) est pourvu au voisinage d'une de ses extrémités d'une ouverture d'entrée pour l'insufflation de l'air et au voisinage de son extrémité opposée d'une ouverture ou conduite (22, 23) reliant celui-ci au canal d'air chaud (24, 25).

2. Dispositif selon la revendication 1, caractérisé en ce que l'élément chauffant est constitué par une spirale chauffante (14, 15).

3. Dispositif selon la revendication 1 ou 2, caractérisé en ce que le deuxième canal (11, 12) contenant l'élément chauffant est relié au canal d'air chaud (24, 25) par une conduite (22, 23) qui débouche à peu près dans la zone médiane du canal d'air chaud (24, 25).

4. Dispositif selon l'une des revendications 1 à 3, caractérisé en ce qu'on prévoit à chaque fois deux canaux d'air chaud (24, 25) et deux deuxièmes canaux (11, 12) contenant les éléments chauffants (14, 15) qui sont séparés l'un de l'autre à leurs extrémités internes par des parois intermédiaires (13) du boîtier (3').

5. Dispositif selon la revendication 4, caractérisé en ce que les deuxièmes canaux (11, 12) contenant les éléments chauffants sont pourvus au voisinage de leurs extrémités externes de buses ou d'ouvertures pour l'insufflation de l'air.
